# EUROPEAN PATENT APPLICATION

(11) **EP 1 555 467 A1**
(43) Date of publication of application: **20.07.2005**
(21) Application number: 05000610.5
(22) Date of filing: 13.01.2005
(51) Int. Cl.: F16J 15/32

(54) **Sealing device and compressor**

(30) Priority: 15.01.2004 JP 2004008312
(71) Applicant: Kabushiki Kaisha Toyota Jidoshokki, Kariya-shi, Aichi-ken (JP)
(72) Inventor: Ota, Masaki, Kariya-shi Aichi-ken (JP); Katayama, Seiji, Kariya-shi Aichi-ken (JP); Fukanuma, Tetsuhiko, Kariya-shi Aichi-ken (JP); Murase, Masakazu, Kariya-shi Aichi-ken (JP)
(74) Representative: Leson, Thomas Johannes Alois, Dipl.-Ing.

(57) **Abstract**

A compressor (10) including a housing (11), a rotary shaft (17) extending through the housing, and a sealing device (39) arranged about the rotary shaft (17) to seal the housing (11). A shaft bore (40) extends through the housing for insertion of the rotary shaft. An elastomer lip ring (44) seals the housing (11) in cooperation with the rotary shaft (17), while contacting the peripheral surface (17a) of the rotary shaft in a slidable manner. A pressure resistant reinforcement (45) arranged in the shaft includes a backup ring (53), which is arranged between the elastomer lip ring (44) and the rotary shaft (17), and a stopper (51), which is fixed in the shaft bore (40). The backup ring (53) contacts the elastomer lip ring (44). The stopper (51) restricts movement of the backup ring (53) in the axial direction relative to the rotary shaft and enables movement of the backup ring in a radial direction relative to the rotary shaft.

## Description

The present invention relates to a sealing device for use in a fluid machine, such as a refrigerant compressor incorporated in a refrigeration circuit, for sealing the surrounding of a drive shaft in the fluid machine, and to a compressor incorporating the sealing device.

Such a type of sealing device includes an elastomer lip ring and a pressure resistant reinforcement ring which are retained in a case. The elastomer lip ring has a tubular sleeve that extends toward the inner side of a refrigerant compressor. A lip is defined on the distal end of the sleeve. The lip contacts the peripheral surface of a drive shaft in a slidable manner. The reinforcement sleeve supports the inner surface of the sleeve of the elastomer lip ring.

In the prior art, the lip of the elastomer lip ring is not supported by the reinforcement ring to be movable in the radial direction of the drive shaft. Further, assuming interference due to eccentricity of the drive shaft, a predetermined gap is provided between the reinforcement ring and the peripheral surface of the drive shaft. Accordingly, When the interior pressure of the compressor becomes high, the lip of the sealing device is pressed with a strong force against the peripheral surface of the drive shaft over a preferable area.

In this state, the slide resistance between the lip and the drive shaft increases. Further, the high interior pressure of the compressor may push the lip into the gap between the reinforcement ring and the drive shaft. This may affect the movable performance in the radial direction of the lip or damage the lip. Thus, there is a possibility of the sealing capability of the sealing device decreasing.

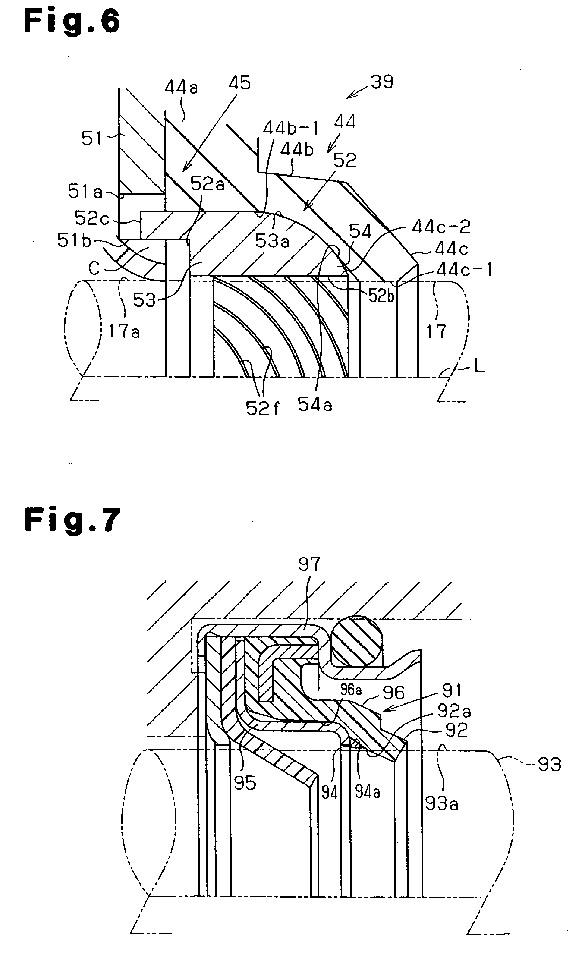

Japanese Laid-Open Patent Publication No. 2001-304423 describes a technique for solving this problem. More specifically, referring to Fig. 7, an elastomer lip ring 91 has a lip 92 with a tapered inner surface 92a. A support ring 94 is arranged between the inner surface 92a and a peripheral surface 93a of a drive shaft 93 to support the inner surface 92a. The support ring 94 is formed separately from a pressure resistant reinforcement ring 95. The support ring 94 has a tapered support surface 94a and is movable in the radial direction of the drive shaft 93 relative to the reinforcement ring 95. Accordingly, the support ring 94 stably supports the inner surface of the lip 92 without affecting the performance of the lip 92. As a result, the lip 92 is prevented from being pressed against the peripheral surface 93a of the drive shaft 93 over a preferable area with a strong force even when high interior pressure of the compressor acts on the lip 92.

In the prior art sealing device of Japanese Laid-Open Patent Publication No. 2001-304423, the elastomer lip ring 91 has a sleeve 96 with an inner surface 96a. The reinforcement ring 95, which is retained in a case 97, supports the inner surface 96a. Thus, eccentricity of the drive shaft 93 resulting from assembly errors or eccentric motion generated during rotation of the drive shaft 93 may cause flexing of the sleeve 96 as the lip 92 follows the drive shaft 93. This may destabilize the support of the sleeve 96 with the reinforcement ring 95 and may decrease the durability of the elastomer lip ring 91.

To support the inner surface of the elastomer lip ring, the sealing device of Japanese Laid-Open Patent Publication No. 2001-304423 includes two separate members, the reinforcement ring 95 and the support ring 94. The support ring 94 is a small member. Thus, the attachment of the support ring 94 to the sealing device is difficult.

A first object of the present invention is to provide a sealing device that stably supports the sleeve of an elastomer lip ring even when a rotary shaft is eccentric and to provide a compressor including such a sealing device. A second object of the present invention is to provide a sealing device that does not have to use separate members for supporting the inner surface of the sleeve of an elastomer lip ring and for supporting the lip of the elastomer lip ring and to provide a compressor including such a sealing device.

One aspect of the present invention is a sealing device for arrangement about a rotary shaft extending from the interior of a housing for a machine to the exterior. The housing includes a shaft bore through which the rotary shaft is inserted. The sealing device includes an elastomer lip ring arranged in the shaft bore. The elastomer lip ring includes a sleeve extending along the rotary shaft to seal the interior of the housing from the exterior in cooperation with the rotary shaft, and an elastomer lip contacting a peripheral surface of the rotary shaft in a slidable manner. The elastomer lip extends from a distal end of the sleeve toward the rotary shaft and has a distal end located inward from the distal end of the sleeve with respect to an axial direction of the rotary shaft. A pressure resistant reinforcement is arranged in the shaft bore. The pressure resistant reinforcement includes a backup ring which is arranged between the sleeve and the rotary shaft, and a stopper which is fixed in the shaft bore. The backup ring contacts the sleeve and the elastomer lip of the elastomer lip ring. The stopper restricts separation of the backup ring from the elastomer lip in the axial direction relative to the rotary shaft and enables movement of the backup ring in a radial direction relative to the rotary shaft.

Another aspect of the present invention is a compressor including a housing, a rotary shaft extending from the interior of the housing to the exterior, and a sealing device arranged about the rotary shaft for sealing the interior of the housing from the exterior. The housing includes a shaft bore through which the rotary shaft is inserted. The sealing device includes an elastomer lip ring arranged in the shaft bore. The elastomer lip ring includes a sleeve which is extending along the rotary shaft to seal the interior of the housing from the exterior in cooperation with the rotary shaft, and an elastomer lip which is contacting a peripheral surface of the rotary shaft in a slidable manner. The elastomer lip extends from a distal end of the sleeve toward the rotary shaft and has a distal end located inward from the distal end of the sleeve with respect to an axial direction of the rotary shaft. A pressure resistant reinforcement is arranged in the shaft bore. The pressure resistant reinforcement includes a backup ring which is arranged between the sleeve and the rotary shaft, and a stopper which is fixed in the shaft bore. The backup ring contacts the sleeve and the elastomer lip of the elastomer lip ring. The stopper restricts movement of the backup ring to separate from the elastomer lip in the axial direction relative to the rotary shaft and enables movement of the backup ring in a radial direction relative to the rotary shaft.

Other aspects and advantages of the present invention will become apparent from the following description, taken in conjunction with the accompanying drawings, illustrating by way of example the principles of the invention.

The invention, together with objects and advantages thereof, may best be understood by reference to the following description of the presently preferred embodiments together with the accompanying drawings in which:
Fig. 1 is a cross-sectional view of a variable displacement compressor including a sealing device according to a preferred embodiment of the present invention;
Fig. 2 is an enlarged view of the sealing device of Fig. 1;
Fig. 3 is an exploded perspective view showing a pressure resistant reinforcement;
Fig. 4 is a partial cross-sectional view of a sealing device according to a further embodiment of the present invention;
Fig. 5 is a partial cross-sectional view of a sealing device according to another embodiment of the present invention;
Fig. 6 is a partial cross-sectional view of a sealing device according to still another embodiment of the present invention; and
Fig. 7 is a partial cross-sectional view showing a sealing device in the prior art.

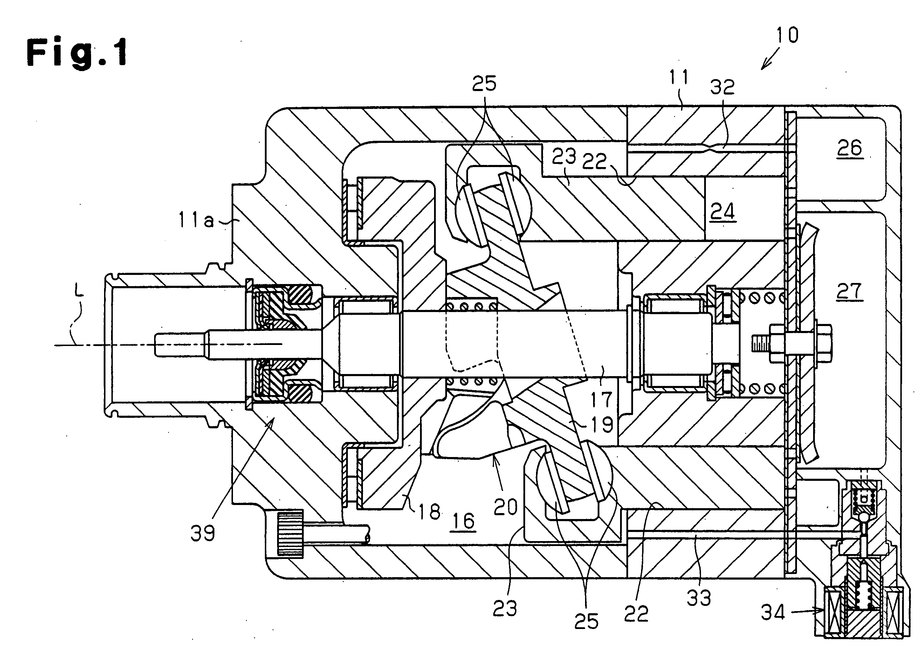

A preferred embodiment of a sealing device according to the present invention will now be discussed with reference to Figs. 1 to 3. The sealing device is used in a variable displacement compressor 10 forming part of a refrigeration circuit in a vehicle air conditioner. Carbon dioxide is employed as the refrigerant for the refrigeration circuit.

Fig. 1 is a cross-sectional diagram of the variable displacement compressor 10. As shown in Fig. 1, the compressor 10 has a housing 11 that includes a crank chamber 16. A drive shaft 17, which functions as a rotary shaft, is rotatably arranged in the crank chamber 16. The drive shaft 17 is connected to an engine (not shown), which functions as a vehicle drive source. The drive shaft 17 is powered by the engine and rotated.

A lug plate 18 is fixed to the drive shaft 17 in the crank chamber 16 to rotate integrally with the drive shaft 17. The drive shaft 17 supports a swash plate 19 in the crank chamber 16. The swash plate 19 is movable in the axial direction of the drive shaft 17 and inclinable relative to the drive shaft 17. A hinge mechanism 20 connects the lug plate 18 and the swash plate 19. The swash plate 19 is connected to the lug plate 18 by the hinge mechanism 20 and supported by the drive shaft 17. Thus, the swash plate 19 is rotated integrally with the lug plate 18 and the drive shaft 17 and inclined relative to the drive shaft 17 as it moves along the axis L of the drive shaft 17 (in the axial direction).

A plurality of cylinder bores 22 extend around the axis L of drive shaft 17. A plurality of pistons 23 are inserted into the cylinder bores 22. In each cylinder bore 22, the piston 23 defines a space that functions as a compression chamber 24. Each piston 23 is connected to the peripheral portion of the swash plate 19 by a pair of shoes 25.

Rotation of the drive shaft 17 rotates the swash plate 19 and wobbles the swash plate 19 in the axial direction of the drive shaft 17. The wobbling of the swash plate 19 reciprocates each piston 23 in the axial direction of the drive shaft 17. This draws refrigerant gas into the corresponding compression chamber 24 from an external refrigeration circuit (not shown), compresses the refrigerant gas drawn into the compression chamber 24, and discharges the compressed refrigerant gas to the external refrigeration circuit.

The housing 11 of the compressor 10 includes a bleed passage 32, a supply passage 33, and a control valve 34. The supply passage 33 connects the crank chamber 16 to a discharge chamber 27. The control valve 34, which is a known electromagnetic valve, is arranged in the supply passage 33. The open degree of the control valve 34 is adjusted to control the balance between the amount of gas entering the crank chamber 16 through the supply passage 33 and the amount of gas exiting the crank chamber 16 through the bleed passage 32. This consequently determines the pressure of the crank chamber 16.

Change in the pressure of the crank chamber 16 changes the difference between the pressure of the crank chamber 16 and the pressure of the compression chambers 24 via each piston 23. This adjusts the stroke of the pistons 23 in the cylinder bores 22 and alters the inclination angle of the swash plate 19 with respect to the drive shaft 17. As a result, the amount of gas discharged from the compressor 10 is adjusted. For example, a decrease in the pressure of the crank chamber 16 lengthens the stroke of the pistons 23 and increases the inclination angle of the swash plate 19 relative to the drive shaft 17. This increases the amount of gas discharged from the compressor 10. Conversely, an increase in the pressure of the crank chamber 16 shortens the stroke of the pistons 23 and decreases the inclination angle of the swash plate 19 relative to the drive shaft 17. This decreases the amount of gas discharged from the compressor 10.

The sealing structure for the housing 11 will now be discussed.

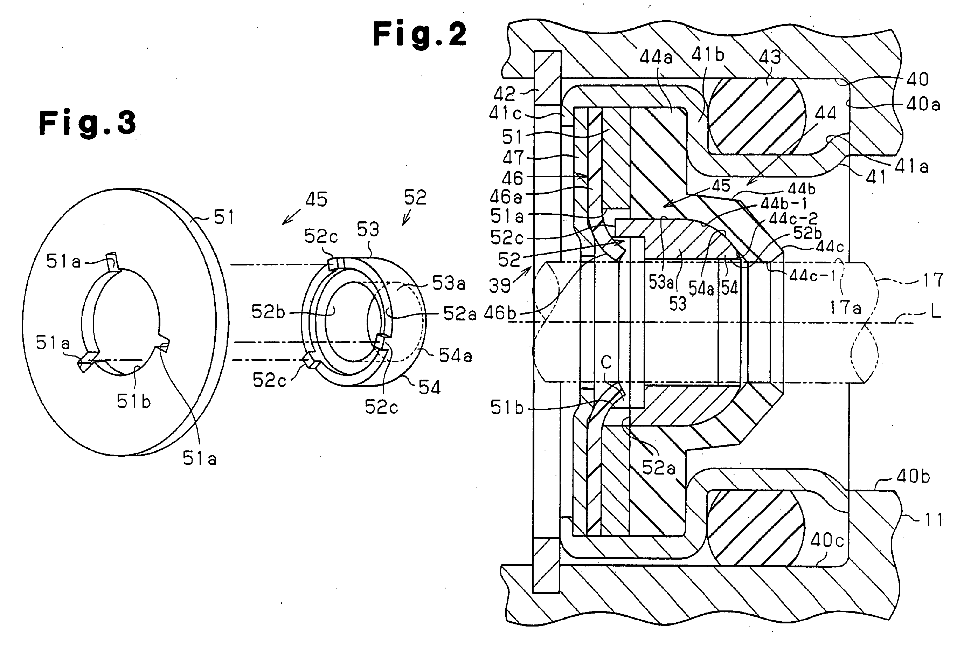

The housing 11 has a front wall 11a. Referring to Fig. 2, a shaft bore 40 extends through the front wall 11a so as to connect the interior and exterior of the housing 11. The drive shaft 17 is inserted through the shaft bore 40. A lip type sealing device 39 is arranged in the shaft bore 40. The sealing device 39 seals a peripheral surface 17a of the drive shaft 17 so that fluid does not flow out of the interior of the housing 11 (from the crank chamber 16) to the exterior of housing 11 (atmosphere).

The shaft bore 40 includes a stepped portion 40a defined between an inner portion 40b and an outer portion 40c. The diameter of the inner portion 40b is smaller than that of the outer portion 40c. A snap ring 42 is attached to the outer portion 40c in the shaft bore 40. The sealing device 39 includes a tubular metal case 41. The case 41 is arranged between the stepped portion 40a and the snap ring 42 in the shaft bore 40.

An annular pit 41a extends along the outer surface of the case 41. A rubber O-ring 43 is fitted in the pit 41a. The O-ring 43 seals the space between the outer surface of the case 41 and the wall surface of the shaft bore 40. This prevents the flow of fluid between the inner side and outer side of the O-ring 43, that is, housing 11.

The case 41 accommodates an elastomer lip ring 44, a pressure resistant reinforcement 45, a resin lip ring 46, and a retaining ring 47. The elastomer lip ring 44 and the resin lip ring 46 both seal the space between the inner surface of the case 41 and the peripheral surface 17a of the drive shaft 17. This prevents the flow of fluid between the inner side and the outer side of the elastomer and resin lip rings 44 and 46. The reinforcement 45 supports the back surface of the elastomer lip ring 44 so that the elastomer lip ring 44 is not excessively flexed toward the drive shaft 17 even when the pressure of the housing 11 becomes high. The retaining ring 47 supports the resin lip ring 46.

The elastomer lip ring 44 is made of elastomer. Further, the elastomer lip ring 44 includes an annular flange 44a, a sleeve 44b extending into the housing 11 from the inner circumference of the flange 44a, and an elastomer lip 44c extending toward the drive shaft 17 from the distal end of the sleeve 44b. The elastomer lip 44c is inclined so that the elastomer lip 44c is located more inward in the housing 11 as the elastomer lip 44c becomes closer the drive shaft 17. A tapered annular tip 44c-1 is formed on the inner circumference of the elastomer lip 44c. High pressure in the housing 11 and the elasticity of the elastomer lip 44c cause the annular tip 44c-1 to contact the peripheral surface 17a of the drive shaft 17.

An annular land 41b is formed next to the pit 41a so as to project from the pit 41a in the radial direction of the drive shaft 17. The flange 44a of the elastomer lip ring 44 contacts the side wall of the land 41b.

The retaining ring 47 is annular and made of metal. The outer end of the case 41 is bent toward the drive shaft 17 to define a holding portion 41c. The retaining ring 47 is accommodated in the case 41 with its peripheral portion engaged with the holding portion 41c.

The resin lip ring 46 is made of a fluorine resin (e.g., polytetrafluoroethylene). The resin lip ring 46 includes an annular base 46a and a resin lip 46b, which extends into the housing 11 from the inner circumference of the base 46a. The resin lip 46b is inclined so that the resin lip 46b is located more inward in the housing 11 as the resin lip 46b becomes closer the drive shaft 17. High pressure of the housing 11 causes the inner circumference of the resin lip 46b to contact the peripheral surface 17a of the drive shaft 17.

The pressure resistant reinforcement 45 includes an annular stopper ring 51, which functions as a stopper, and a substantially tubular backup ring 52. The stopper ring 51 is made of carbon and the backup ring 52 is made of metal. The stopper ring 51 is arranged between and in contact with the flange 44a of the elastomer lip ring 44 and the base 46a of the resin lip ring 46.

The flange 44a of the elastomer lip ring 44, the stopper ring 51 of the pressure resistant reinforcement 45, the base 46a of the resin lip ring 46, and the retaining ring 47 are arranged in this order from the inner side to the outer side of the housing 11 in a superimposed manner and held by the land 41b and the holding portion 41c of the case 41. The land 41b of the case 41 contacts the flange 44a of the elastomer lip ring 44, the flange 44a contacts the stopper ring 51, the stopper ring 51 contacts the base 46a of the resin lip ring 46, and the base 46a contacts the retaining ring 47 to prevent the flow of fluid.

The resin lip 46b of the resin lip ring 46 is arranged in a clearance C formed between a shaft hole 51b of the stopper ring 51 and the peripheral surface 17a of the drive shaft 17. In other words, the shaft hole 51b of the stopper ring 51 includes space for enabling the accommodation of the resin lip 46b.

The backup ring 52 is rotatably fitted to the drive shaft 17 so as to contact an inner surface 44b-1 in the sleeve 44b of the elastomer lip ring 44. To improve slidability with respect to the peripheral surface 17a of the drive shaft 17, an inner surface 52b of the backup ring 52 is treated by coating a resin (solid lubricant material) having a solid lubricant effect, such as fluorine resin (e.g., polytetrafluoroethylene, polyacetal, and polyamide). The solid lubricant material has a friction coefficient that is smaller than the carbon or metal forming the backup ring 52.

The backup ring 52 has an outer end surface 52a contacting the inner circumferential portion of the stopper ring 51. This restricts outward movement of the backup ring 52 in the axial direction of the drive shaft 17 so that the backup ring 52 is not separated from the elastomer lip 44c. Relative movement of the backup ring 52 with respect to the stopper ring 51 is enabled in the radial direction of the drive shaft 17.

The backup ring 52 includes a sleeve support 53 for supporting the sleeve 44b of the elastomer lip ring 44. The sleeve support 53 has a sleeve support surface 53a that contacts the inner surface 44b-1 in the sleeve 44b of the elastomer lip ring 44. The sleeve support surface 53a is defined by the cylindrical, peripheral surface of the sleeve support 53. The backup ring 52 further includes a lip support 54 for supporting the elastomer lip 44c of the elastomer lip ring 44. The lip support 54 includes a lip support surface 54a, which contacts an inner surface 44c-2 of the elastomer lip 44c. The lip support surface 54a is formed to extend along the inner surface 44c-2 of the elastomer lip 44c, which is tapered. The lip support surface 54a is tapered relative to the axial direction of the drive shaft 17 so that it becomes narrower toward inner portions. The sleeve support 53 and the lip support 54 of the backup ring 52 are arranged along the axial direction of the drive shaft 17.

As shown in Fig. 2 and 3, a plurality of (three in the present embodiment) key grooves 51a are formed in the inner circumferential portion of the stopper ring 51. Each key groove 51a extends radially in the inner circumferential portion of the stopper ring 51 along the axial direction of the drive shaft 17. The key grooves 51a are formed at equal angular intervals in the inner circumferential portion of the stopper ring 51. A plurality of (three in the present embodiment) keys 52c protrude from the outer end surface 52a of the backup ring 52 outward of the housing 11. The keys 52c are formed at equal angular intervals on the outer end surface 52a of the backup ring 52. The keys 52c of the backup ring 52 are inserted in the corresponding key grooves 51a of the stopper ring 51.

Relative rotation between the backup ring 52 and the stopper ring 51 is restricted when the side walls of the keys 52c abut against the side walls of the key grooves 51a. In other words, the key grooves 51a and the keys 52c function as a means for restricting rotation of the backup ring 52 relative to the stopper ring 51. The key grooves 51a are longer than the keys 52c in the radial direction of the drive shaft 17. Thus, the backup ring 52 is movable relative to the stopper ring 51 in the radial direction of the drive shaft 17.

The preferred embodiment has the advantages described below.
(1) The pressure resistant reinforcement 45 includes the backup ring 52 and the stopper ring 51. The backup ring 52, which is rotatably fitted to the drive shaft 17, supports the inner surface 44b-1 in the sleeve 44b of the elastomer lip ring 44. The stopper ring 51 is held in the case 41. Further, the stopper ring 51 restricts separation of the backup ring 52 from the elastomer lip 44c in the axial direction of the drive shaft 17, while enabling movement of the backup ring 52 in the radial direction of the drive shaft 17.
   The backup ring 52, which supports the inner surface 44b-1 in the sleeve 44b of the elastomer lip ring 44, is separate from the stopper ring 51 and movable relative to the stopper ring 51 in the radial direction of the drive shaft 17. Accordingly, when an eccentric motion is produced during rotation of the drive shaft 17, the backup ring 52 follows the eccentric motion of the drive shaft 17 and is thus displaceable. Therefore, the backup ring 52 stably supports the inner surface 44b-1 in the sleeve 44b of the elastomer lip ring 44. Further, the sleeve 44b is prevented from being excessively flexed toward the drive shaft 17 by the high pressure of the housing 11. This improves the durability of the elastomer lip ring 44.
(2) The backup ring 52 includes the lip support 54 to support the inner surface 44c-2 of the elastomer lip 44c from its inner side. Thus, the backup ring 52 stably supports the elastomer lip 44c without interfering with displacement of the elastomer lip 44c in the radial direction of the drive shaft 17. As a result, even if the high pressure of the interior of the housing 11 is applied to the elastomer lip ring 44, the elastomer lip 44c is prevented from being pressed against the peripheral surface 17a of the drive shaft 17 over a preferable area. This prevents the slide resistance between the elastomer lip 44c and the drive shaft 17 from increasing. Further, the elastomer lip ring 44 is prevented from being caught in the space between the backup ring 52 and the drive shaft 17 when the high pressure of the interior of the housing 11 is applied to the elastomer lip ring 44. Accordingly, displacement of the elastomer lip 44c in the radial direction of the drive shaft 17 is not interfered with, and portions of the elastomer lip 44c do not get caught between other components. Thus, the capability for stopping the flow of fluid out of the sealing device 39 is easily maintained.
(3) The backup ring 52 includes the sleeve support 53, which supports the inner surface 44b-1 in the sleeve 44b of the elastomer lip ring 44, and the lip support 54, which supports the inner surface 44c-2 of the elastomer lip 44c. Thus, the backup ring 52 solely supports both the sleeve 44b and the elastomer lip 44c. Accordingly, the present embodiment easily solves the problems of the art described in, for example, Japanese Laid-Out Patent Publication No. 2001-304423. In other words, the present invention solves the problem of Fig. 7 that occurs due to the separate structure of the member (pressure resistant reinforcement ring 95) for supporting the inner surface 96a in the sleeve of the elastomer lip ring 91 and the member (support ring 94) for supporting the inner surface 92a of the lip 92. That is, the present invention solves the problem in that the support ring 94 is so small that assembly of the sealing device 39 is difficult.
(4) The means for restricting rotation of the backup ring 52 relative to the stopper ring 51 (key grooves 51a and keys 52c) is arranged between the stopper ring 51 and the backup ring 52. Thus, the backup ring 52 is not rotated when the drive shaft 17 rotates. This suppresses sliding between the backup ring 52 and the elastomer lip ring 44, which, in turn, prevents abrasion of the elastomer lip ring 44.
(5) The resin lip 46b is arranged in the clearance C between the shaft hole 51b and the peripheral surface 17a of the drive shaft 17. That is, the resin lip 46b and the stopper ring 51 are arranged at the same positions with respect to the axial direction of the drive shaft 17. This enables the size of the sealing device 39 to be reduced in the axial direction of the drive shaft 17.
(6) In the preferred embodiment, carbon dioxide is used as the refrigerant for the refrigeration circuit. In comparison with when using chlorofluorocarbon as the refrigerant, the load applied to the elastomer lip ring 44 becomes extremely large when the pressure in the compressor 10 becomes extremely high. Thus, the present embodiment is especially effective for improving the durability of the elastomer lip ring 44.

It should be apparent to those skilled in the art that the present invention may be embodied in many other specific forms without departing from the spirit or scope of the invention. Particularly, it should be understood that the present invention may be embodied in the following forms.

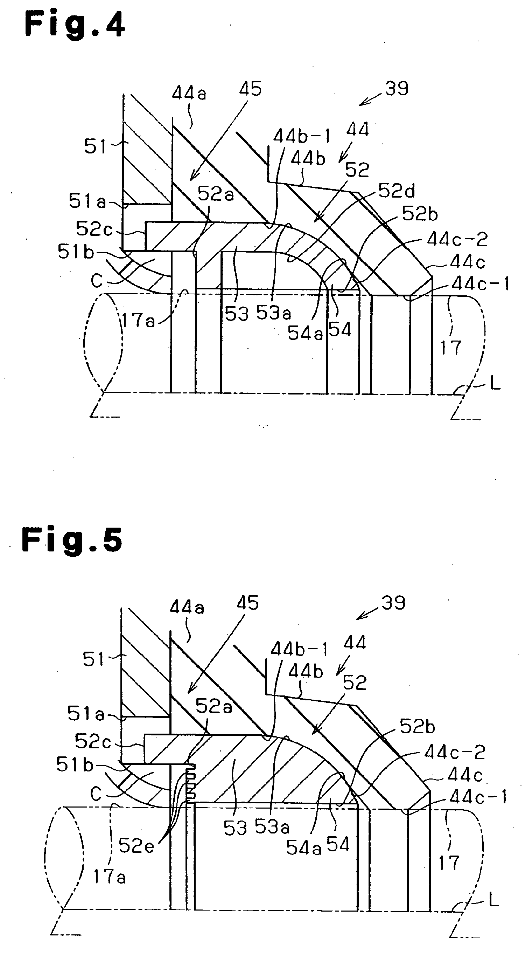

Referring to Fig. 4, a reserve recess 52d for collecting lubricating agent, such as lubrication oil, may be formed in the inner surface 52b of the backup ring 52. The reserve recess 52d is annular and extends radially into the inner surface 52b of the backup ring 52. In this case, the reserve recess 52d collects lubrication oil (refrigerator oil) that leaks out of the elastomer lip 44c. The lubrication oil lubricates the inner surface 52b of the backup ring 52 and the peripheral surface 17a of the drive shaft 17. This improves the durability of the backup ring 52.

The lubricating agent in the reserve recess 52d may be, for example, grease which is reserved previously.

In this embodiment, the backup ring 52 is provided with a function for supporting the sleeve 44b of the elastomer lip ring 44 and a function for supporting the elastomer lip 44c. Thus, the backup ring 52 is relatively large, and the formation of the reserve recess 52d is easy. In other words, the inner surface 52b of the backup ring 52 is large enough to form the reserve recess 52d.

Referring to Fig. 5, heat radiation fins 52e may be formed on the outer end surface 52a of the backup ring 52. The heat radiation fins 52e are located inward, in the radial direction of the drive shaft 17, from the location where the backup ring 52 contacts the stopper ring 51. In this case, the heat radiation fins 52e effectively radiate the heat transmitted from the elastomer lip ring 44 to the backup ring 52. This improves the heat radiation capability of the elastomer lip ring 44 and suppresses thermal deterioration of the elastomer lip ring 44.

In this embodiment, the backup ring 52 is provided with a function for supporting the sleeve 44b of the elastomer lip ring 44 and a function for supporting the elastomer lip 44c. Thus, the backup ring 52 is relatively large, and the formation of the radiation fins 52e is easy. In other words, the inner surface 52b of the backup ring 52 is large enough to form the radiation fins 52e.

Referring to Fig. 6, a spiral groove 52f may be formed in the inner surface 52b of the backup ring 52. The spiral groove 52f realizes a fluid pump effect that moves fluid in the axial direction of the drive shaft 17 when the drive shaft 17 rotates relative to the backup ring 52.

When the spiral groove 52f is formed so that, for example, fluid moves from the outer side to the inner side of the compressor 10, this makes it difficult for fluid (refrigerant gas and lubrication oil) to leak from the elastomer lip ring 44 to outside of the compressor 10. Thus, the sealing capability of the sealing device 39 with respect to fluid is improved. Further, since lubrication oil is returned to the elastomer lip ring 44, the durability of the elastomer lip ring 44 is improved. When the spiral groove 52f is formed so that fluid moves from the inner side to the outer side of the compressor 10, lubrication oil is supplied to the resin lip ring 46 in an optimal manner. This improves the durability of the resin lip ring 46.

In this embodiment, the backup ring 52 is provided with a function for supporting the sleeve 44b of the elastomer lip ring 44 and a function for supporting the elastomer lip 44c. Thus, the backup ring 52 is large enough to form the spiral groove 52f.

Instead of applying a resin coating to the inner surface 52b of the backup ring 52, a resin coating may be applied to the peripheral surface 17a of the drive shaft 17 at portions facing the backup ring 52. In this case, a solid lubricant material having a friction coefficient that is lower than the metal forming the drive shaft (e.g., polytetrafluoroethylene, polyacetal, and polyamide) may be used. Alternatively, a resin coating may be applied to both the inner surface 52b of the backup ring 52 and the peripheral surface 17a of the drive shaft 17.

Further, instead of applying a resin coating to the inner surface 52b of the backup ring 52 and the peripheral surface 17a of the drive shaft 17, an annular slide member may be arranged between the inner surface 52b of the backup ring 52 and the peripheral surface 17a of the drive shaft 17. In this case, the slide member is formed from a solid lubricant material (e.g., polytetrafluoroethylene) having a friction coefficient that is smaller than that of the material forming the backup ring 52 and the drive shaft 17.

Either one of the stopper ring 51 and the backup ring 52 may be formed from a resin material such as fluorine resin. More specifically, the backup ring 52 may be formed by a solid lubricant material, such as polytetrafluoroethylene. This would make the backup ring 52 lighter.

Keys may be formed on the stopper ring 51, and key grooves may be formed in the backup ring 52 to form the means for restricting rotation of the backup ring 52.

The key grooves 51a and the keys 52c may be eliminated. Instead, the sleeve support surface 53a of the backup ring 52 and the inner surface 44b-1 of the elastomer lip ring 44 may include recesses and projections that are engaged with each other. In this case, the recesses and projections function as the means for restricting rotation of the backup ring 52.

The rotation restriction means (the key grooves 51a and the keys 52c) may be eliminated.

The stopper (stopper ring 51 in the preferred embodiment) does not have to be annular and may be formed from, for example, a plurality of square or rectanglar plates. With such a stopper, one end of each plate is arranged between the flange 44a of the elastomer lip ring 44 and the base 46a of the resin lip ring 46. The other end of each plate abuts against the outer end surface 52a of the backup ring 52 and is attached to the sealing device 39.

The case 41 may be eliminated. In this case, the elastomer lip ring 44, the pressure resistant reinforcement 45, the resin lip ring 46, and the retaining ring 47 are all accommodated in the shaft bore 40 extending through the housing 11 of the compressor 10. Further, these members 44, 45, 46, and 47 are all directly held between the stepped portion 40a and the snap ring 42. In this case, the housing 11 of the compressor 10 functions as the case for the sealing device 39.

In addition to the variable displacement compressor using carbon dioxide as the refrigerant, the sealing device of the present invention may be applied to a fixed displacement compressor or a refrigerant compressor for a refrigeration circuit using chlorofluorocarbon (e.g., R134a) as a refrigerant.

The sealing device of the present invention may be applied to a fluid machine (e.g., air compressor or hydraulic pump) used in a fluid circuit such as an air circuit or a hydraulic unit.

In addition to a fluid machine, the sealing device of the present invention may be applied to a rotation machine, such as an expansion machine.

The present examples and embodiments are to be considered as illustrative and not restrictive, and the invention is not to be limited to the details given herein, but may be modified within the scope and equivalence of the appended claims.

A compressor including a housing, a rotary shaft extending through the housing, and a sealing device arranged about the rotary shaft to seal the housing. A shaft bore extends through the housing for insertion of the rotary shaft. An elastomer lip ring seals the housing in cooperation with the rotary shaft, while contacting the peripheral surface of the rotary shaft in a slidable manner. A pressure resistant reinforcement arranged in the shaft includes a backup ring, which is arranged between the elastomer lip ring and the rotary shaft, and a stopper, which is fixed in the shaft bore. The backup ring contacts the elastomer lip ring. The stopper restricts movement of the backup ring in the axial direction relative to the rotary shaft and enables movement of the backup ring in a radial direction relative to the rotary shaft.

## Claims

1. A sealing device including an elastomer lip ring, a pressure resistant reinforcement supporting the elastomer lip ring, and a case accommodating the elastomer lip ring and the pressure resistant reinforcement, the sealing device **characterized in that**:
the elastomer lip ring includes a tubular sleeve which is extending into a sealed space in a machine, and an elastomer lip which is formed on a distal end of the sleeve for contacting a peripheral surface of a rotary shaft;
the pressure resistant reinforcement including a backup ring fitted to the peripheral surface of the rotary shaft to support an inner surface of the sleeve, and a stopper held in the case, wherein the stopper contacts the backup ring to restrict separation of the backup ring from the elastomer lip in the axial direction of the rotary shaft, the stopper enabling movement of the backup ring relative to the stopper in the radial direction of the rotary shaft.

2. The sealing device according to claim 1, **characterized in that** the backup ring includes a sleeve support for supporting an inner surface of the sleeve of the elastomer lip ring and a lip support for supporting an inner surface of the elastomer lip, the sleeve support and the lip support being continuously connected in the axial direction of the rotary shaft.

3. The sealing device according to any one of claims 1 and 2, **characterized by** a rotation restriction means, which is arranged between the backup ring and the stopper, for restricting rotation of the backup ring relative to the stopper.

4. The sealing device according to any one of claims 1 to 3, **characterized in that** either one of an inner surface of the backup ring and the peripheral surface of the rotary shaft facing towards the inner surface is coated with a solid lubricant material.

5. The sealing device according to any one of claims 1 to 3, **characterized in that** the backup ring is formed by a resin solid lubricant material.

6. The sealing device according to any one of claims 1 to 5, **characterized in that** the backup ring includes an inner surface that slides along the peripheral surface of the rotary shaft and a reserve recess formed in the inner surface for collecting a lubrication agent.

7. The sealing device according to any one of claims 1 to 6, **characterized in that** the backup ring includes a heat radiation fin.

8. The sealing device according to any one of claims 1 to 7, **characterized in that** the backup ring includes an inner surface that slides along the peripheral surface of the rotary shaft and a spiral groove formed in the inner surface.

9. The sealing device according to any one of claims 1 to 8, **characterized by** a resin lip ring accommodated in the case, the resin lip ring and the sealed space being arranged on opposite sides of the elastomer lip ring, wherein the resin lip ring includes a resin lip, contacting the peripheral surface of the rotary shaft, the resin lip extending into a clearance between the stopper and the peripheral surface of the rotary shaft.

10. The sealing device according to claim 3, wherein the rotation restriction means includes a key groove arranged in the stopper and a key arranged in the backup ring, the key being inserted in the key groove so that a side wall of the key is abuttable against a side wall of the groove.

11. The sealing device according to claim 10, wherein the key groove is longer than the key in the radial direction of the rotary shaft.

12. A compressor including the sealing device according to any one of claims 1 to 11, **characterized in that** the rotary shaft is a drive shaft, and the sealing device seals the surrounding of the drive shaft.
